# EUROPÄISCHE PATENTANMELDUNG

(11) **EP 2 267 873 A2**
(43) Veröffentlichungstag der Anmeldung: **29.12.2010**
(21) Anmeldenummer: 10183879.5
(22) Anmeldetag: 18.03.2004
(51) Int. Cl.: H02K 35/06, H01H 13/48, G08C 17/02

(54) **Energieautarke Funkeinheit**

(30) Priorität: 07.04.2003 DE 10315764
(62) Teilanmeldung aus: 04721459.8
(71) Anmelder: EnOcean GmbH, 82041 Oberhaching (DE)
(72) Erfinder: Schmidt, Frank, 82054 Altkirchen (DE)
(74) Vertreter: Epping - Hermann - Fischer

(57) **Zusammenfassung**

Die Erfindung betrifft einen elektromagnetischen Energiewandler, umfassend zumindest
- einen Permanentmagneten (2) und
- ein bewegliches Element (6), wobei
- eine elektrische Spule (1)
zumindest einen Teil des Permanentmagneten (2) oder des beweglichen Elements (6) umschließt,
und wobei eine Bewegung des beweglichen Elements (6) aus einer ersten Ruhelage, oder einer zweiten Ruhelage heraus, zu einer Öffnung oder zu einer Schließung eines durch den Permanentmagneten und dem beweglichen Element gebildeten magnetischen Kreises führt.

## Beschreibung

Die Erfindung betrifft eine energieautarke Funkeinheit, die baulich mit einem elektromagnetischen Energiewandler verbunden ist, um einen energieautarken Funkschalter oder energieautarken Funksensor mit elektrischem Strom zu versorgen.

Elektromagnetische Wandler sind in vielen Ausführungsformen zum Beispiel als Generatoren bekannt. Die Energieversorgung von elektrischen oder elektronischen Schaltkreisen, insbesondere von Kleinstschaltkreisen oder kleinen elektrischen Schaltungen in kleinen und kleinsten Geräten oder Bedienelementen, wie zum Beispiel Funkschaltern oder Funksensoren, wird häufig durch Batterie- und/oder Solarenergie, Akkumulatoren oder ähnlichem gebildet. Nachteilig an dieser Art und Weise, kleine oder miniaturisierte Schaltkreise oder kleine Bauteile mit Energie zu versorgen ist, dass der Energieversorger, die Batterie oder der Akku, oftmals ein Vielfaches des Raumes einnimmt, den der eigentliche elektronische Schaltkreis einnimmt und so der durch die Miniaturisierung gewonnene Raumvorteil wieder zunichte gemacht wird. Gleiches gilt für die Versorgung solcher Schaltkreise mit elektrischer Energie durch Solarzellen. Die Größe der Solarzellen übertrifft um ein Vielfaches die Größe des elektronischen Schaltkreises womit auch hier der durch die Miniaturisierung gewonnene Raumvorteil und damit oftmals auch der Gewichtsvorteil zunichte gemacht ist. Als weiterer wesentlicher Nachteil einer solchen Energieversorgung kommt noch hinzu, dass diese Systeme insbesondere, wenn sie mit batterie- oder akkugestützter Energieversorgung ausgestattet sind, nicht wartungsfrei sind. Denn insbesondere Batterien und Akkumulatoren unterliegen einer Alterung und müssen in vorbestimmten Zeitabständen erneuert werden. Zum Beispiel ein Funkschalter, wie er zum Beispiel als Bedienelement einer Kraftfahrzeugverriegelungsanlage mit Funksteuerung bekannt ist, enthält neben seinen elektronischen Komponenten, die die Funktechnik und einen Schaltkontakt bilden, eine Energieversorgung in Form eines Akkumulators oder einer Batterie. Der Schalter und der Akkumulator dürften wohl diejenigen Komponenten sein, die den größten Raumbedarf an diesem kleinen Gerät einnehmen. Auch der Gewichtsanteil dieser beiden Komponenten dürfte gegenüber der elektronischen Schaltung deutlich größer sein. Hinzu kommt, dass der Akkumulator auch während der Zeit in der der Funkschalter nicht benutzt wird, Energie speichern muss, die zu dieser Zeit nicht benötigt wird und als gespeicherte Energie vorgehalten wird.

Es ist die Aufgabe der Erfindung ein System bereitzustellen, das den erforderlichen Raumbedarf für die oben aufgeführten Komponenten und beispielhaften erwähnten Anwendungen optimiert, beziehungsweise verringert.

Diese Aufgabe wird erfindungsgemäß durch die in Patentanspruch 1 vorgeschlagenen Maßnahmen gelöst und in den darauf rückbezogenen Unteransprüchen vorteilhaft weitergebildet.

Dabei ist eine energieautarke Funkeinheit vorgesehen, die zur Energieversorgung baulich mit einem elektromagnetischen Energiewandler verbunden ist, wobei die baulich mit einem elektromagnetischen Energiewandler verbunden ist, um einen energieautarken Funkschalter oder energieautarken Funksensor mit elektrischem Strom zu versorgen. Dabei ist der elektromagnetische Energiewandler so gestaltet, dass durch eine Bewegung des beweglichen Elementes, einer durch den Permanentmagneten und das bewegliche Element gebildeter magnetischer Kreis sich schließt oder öffnet. Das Öffnen oder Schließen des magnetischen Kreises erfolgt dabei nicht in einer langsam ansteigenden stetigen Form, sondern im Grunde schlagartig aus der ersten oder zweiten Ruhelage. Durch diese Schlagartigkeit ergibt sich eine ebenso schlagartige Änderung des magnetischen Flusses die einen elektrischen Strom in der Spule induziert. Dieser elektrische Strom wird dann nachfolgend zur Energieversorgung eines nachgeschalteten elektronischen Schaltkreises, zum Beispiel den eines Funkschalters für Kraftfahrzeugverriegelungsanlagen verwendet.

In einer vorteilhaften Ausführungsform ist vorzugsweise das bewegliche Element aus einem weichmagnetischen Kern gebildet, und wird durch magnetische Selbsthaltekräfte in einer ersten oder zweiten Ruhelage gehalten. Die erste oder zweite Ruhelage können dabei entweder der geöffnete oder der geschlossene Zustand des magnetischen Kreises sein. Es ist dabei unerheblich, aus welcher Ausgangsposition beziehungsweise welche der beiden Stellungen die sogenannte Ruhelage einnimmt, da die Änderung des magnetischen Flusses, gleich wie gerichtet, immer einen elektrischen Strom induziert. Vorteilhaft ist, dass der elektrische Strom in seiner Polarität sich dadurch unterscheidet, ob er induziert wurde durch ein Schließen oder durch ein Öffnen des elektromagnetischen Kreises. Diese Zusatzinformation kann dem nachfolgenden Funksignal aufgeprägt werden, so dass damit zusätzliche Funktionalitäten realisierbar sind.

In einer weiteren vorteilhaften Ausführungsform, ist das bewegliche Element um ein Federelement derart erweitert, dass eine der beiden, durch das bewegliche Element einnehmbaren Lagen eine stabile Lage, zum Beispiel eine erste Ruhelage darstellt. Im Betätigungsfall wird das bewegliche Element dann entgegen einer Federkraft bewegt, bis beispielsweise der magnetische Kreis geöffnet oder geschlossen ist, beim Loslassen des beweglichen Elementes wird dieses durch die Federkraft wieder in die ursprüngliche Ruhelage zurückgedrückt, was wieder zu einem Öffnen beziehungsweise Schließen des magnetischen Kreises führt. Damit wird vorteilhaft zweimal, jeweils beim Öffnen und beim Schließen elektrischer Strom induziert, der im nachfolgenden elektronischen Schaltkreis als Versorgungsenergie verwendbar ist. Allein durch die Erweiterung um das Federelement verdoppelt sich die durch den elektromagnetischen Energiewandler erzeugte, elektrische Energie.

Es ist weiterhin, in einer vorteilhaften Ausführungsform, das bewegliche Element mit einer Totpunktmechanik in Verbindung mit dem Federelement ausgestattet, das heißt das bewegliche Element wird bei Überschreiten eines Totpunktes selbstständig und ohne weiteren Kraftaufwand seitens des Bedieners in die zweite Ruhelage bewegt, damit ist erreicht, dass unabhängig von der Geschwindigkeit, mit der ein Bediener das bewegliche Element bis zum Überschreiten des Totpunktes bewegt, die Intensität der Bewegung nach dem Überschreiten des Totpunktes immer gleich ist und damit die Intensität der induzierten elektrischen Energie auch immer gleich und damit systemimmanent optimiert und vom User unabhängig ist.

Es ist weiter vorteilhaft das bewegliche Element und das Federelement baulich zu vereinen, wobei der Permanentmagnet ringförmig ausgebildet ist, innerhalb des Rings das weichmagnetisierte Element angeordnet ist, das über eine Bodenplatte mit dem Permanentmagneten magnetisch verbunden ist. Es ist weiter vorteilhaft, insbesondere bei dieser Ausführungsform, das bewegliche Element in baulicher Einheit mit einem Federelement kuppelartig über die konzentrischen Ringe zu spannen und so einen kreisförmigen Energiewandler zu bilden. Beim Drücken des Federelementes, mittig in der kuppelartigen Form, wird beim Erreichen des Totpunktes die Kuppel federartig umschnappen, und dann den elektromagnetischen Kreis schließen und in ebensolcher Art und Weise wieder öffnen.

Wahlweise ist in einer vorteilhaften Ausführungsform einer der konzentrischen Ringe mit dem Federelement so verbunden, dass dieser mit dem Federelement bewegt wird. So dass elektrische Energie über die schlagartige Änderung des magnetischen Flusses hinaus, auch dadurch induziert wird, dass die elektrische Spule relativ zu einem Permanentmagnet bewegt wird. Am Anfang oder am Ende einer solchen Bewegung schließt oder öffnet sich der magnetische Kreis. Die Ausbeute an elektrischer Energie ist somit erhöht.

In einer vorteilhaften Ausführungsform sind die beiden konzentrischen Kreise beziehungsweise der elektromagnetische Energiewandler, der Größe einer Knopfzellenbatterie angeglichen. Der Energiewandler stellt, dem oben beschriebenen Prinzip folgend, Energie exakt dann zur Verfügung, wenn diese auch zur Ausführung einer Aktion benötigt wird. Ein solcher Energiewandler kann als aktionsbezogener Energiewandler bezeichnet werden. Ein platzraubendes Speichern von elektrischer Energie kann somit entfallen. Auch ein zusätzliches Schaltelement kann entfallen, da dies in Funktionseinheit mit dem Energiewandler gebildet ist. Da der erfindungsgemäße Energiewandler auch in miniaturisierter Form, in Form und Bauart einer Knopfzellenbatterie angeglichen werden kann, sind die Verwendungsmöglichkeiten nahezu unbegrenzt. Beispielhaft sei hier nur die Verwendung zur Energieversorgung von Funkschaltern genannt.

Vorzugsweise kann der Energiewandler auch noch kleiner als eine Knopfzellenbatterie, in jedem Fall kleiner als mit einem Durchmesser von 1,5 cm ausgeführt werden. Ein solcher Energiewandler eignet sich insbesondere zum Beispiel für die Anwendung von Funkschaltern.

Ein Anwender bedient einen Energiewandler in der Größe eines Knopfes, bei dem durch Drücken auf den Energiewandler mechanische Energie in elektrische Energie gewandelt wird, in dem der magnetische Kreis geschlossen wird. Die dadurch induzierte elektrische Energie wird sofort in einem elektronischen Schaltkreis zur Aussendung eines Funksignals verwendet, und dieses Funksignal löst in der Folge eine Aktion an einem Funkempfänger beziehungsweise an mit diesem verbundenen Geräten aus. Beispielhaft ist ein Verriegelungssystem eines Kraftfahrzeuges zu nennen.

Im folgenden ist die Erfindung anhand eines Ausführungsbeispiels und zwei Figuren näher erläutert.

Es zeigen:
- Figur 1: einen elektromagnetischen Energiewandler in einer Draufsicht und eine Spule
- Figur 2: einen elektromagnetischen Energiewandler in einem Zustand mit offenem und einem Zustand mit geschlossenem magnetischen Kreis.

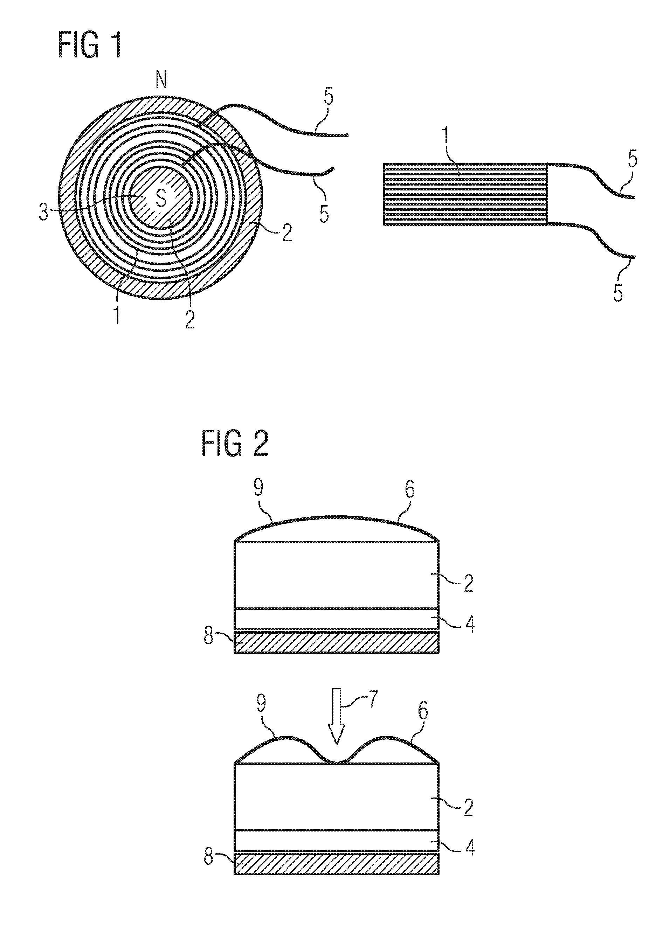

Die Darstellung in Figur 1 zeigt ein Ausführungsbeispiel des elektromagnetischen Energiewandlers in einer Draufsicht, wobei eine elektrische Spule 1 zwischen zwei konzentrischen Kreisen, gebildet aus einem Permanentmagneten 2, eingebettet ist. Einer der beiden konzentrischen Kreise ist dabei der von der Spule umfasste Teil 3 des Magnetkreises. Die Spule ist mit elektrischen Anschlüssen 5 versehen, die zu Weiterleitung des in der Spule induzierten elektrischen Stromes an einem Verbraucher 8 dienen. Zum Beispiel den in der Figur 2 schematisch dargestellten energieautarken Schalter in Form eines elektronischen Schaltkreises.

Die Figur 2 zeigt den elektromagnetischen Wandler der Figur 1 in einer Seitenansicht, mit einer kreisförmigen Bodenplatte 4 die, die in Form von konzentrischen Ringen gebildeten Permanentmagneten 2, miteinander verbindet. In der Figur 2 ist das Federelement und das bewegliche Element in einer baulichen Einheit gebildet, das gemäß eines Schnappers, nach Ausübung einer Kraft 7 umschnappt und damit den magnetischen Kreis schließt.

Energieautarke Funkschalter und Funksensoren können ohne einen Energiespeicher kurzzeitig betrieben werden, indem durch manuelle oder anderweitige mechanische Betätigung Energie zur Verfügung gestellt und mit einem nach dem elektromagnetischen Prinzip arbeitenden Wandler in nutzbare elektrische Energie umgewandelt wird.

Ein besonders vorteilhaftes Ausführungsbeispiel des Energiewandlers ermöglicht:
- Eine stark miniaturisierte Bauform zu realisieren
- Bei Krafteinwirkung und zusätzlich beim Nachlassen der Kraft Energie zu wandeln
- Eine von der Betätigungsgeschwindigkeit unabhängige Mindestenergie zu wandeln
- Mehrere verschiedene Schaltbefehle mit nur einem Energiewandler zu erzeugen

Figur 1 und Figur 2 zeigen ein solches Ausführungsbeispiel des Energiewandlers. Ein Permanentmagnet 2 befindet sich in einem Magnetkreis aus weichmagnetischem Material wie Eisen, Ferrit, oder Trafoblechen 3, 4. Dieser hat ein bewegliches Element 6, welches hier vorteilhaft in baulicher Einheit als bewegliches Federelement mit Totpunktmechanik ausgeführt ist. Diese verbindet rasch zwei magnetisch verschiedene Pole, sobald die ausgeübte Kraft 7 einen vorbestimmten Wert übersteigt. Wenn dies geschieht, schließt sich ein magnetisch gut leitfähiger Kreis, der zuvor durch einen Luftspalt geöffnet war. Dadurch wird eine rasche Änderung des von der Spule 1 umschlossenen Magnetflusses erreicht. Diese Änderung führt zur Induktion einer Spannung, die an den elektrischen Anschlüssen 5 entnommen und zur kurzzeitigen Versorgung einer Funkelektronik eingesetzt werden kann.

Wird also Kraft 7 auf dieses Element 6 ausgeübt, speichert diese die zugeführte Energie durch eine geringfügige Verformung, bis ein Totpunkt erreicht ist. Bei Überschreitung dieses Totpunktes schnappt die Feder relativ rasch in die zweite Lage, die auch eine labile Lage sein kann, in der sie entweder selbst oder über ein zusätzliches magnetisch leitendes Teil den magnetischen Kreis schließt. Dieses Umschnappen geschieht auch bei langsamer Erhöhung der Betätigungskraft mit einer minimalen Geschwindigkeit, die durch die Dimensionierung des Magnetkreises eingestellt werden kann. Auf diese Weise wird sichergestellt, daß auch bei langsamer Betätigung hinreichend Energie zum Betrieb des Funksensors/Funkschalters gewandelt wird. Beim Nachlassen der Betätigungskraft 7 kommt es zum umgekehrten Vorgang: der Magnetkreis wird plötzlich rasch unterbrochen, sobald der Totpunkt erreicht ist und das Federelement bzw. das bewegliche Element, in seinen stabilen Ruhezustand zurückschnappt. Es wird also sowohl beim Drücken als auch beim Loslassen des Energiewandlers Energie erzeugt.

Der magnetische Fluss durch den von der Spule 1 umwickelten Teil des Magnetkreises 3 ändert beim Schließen oder Öffnen des Magnetkreises seine Stärke. Diese rasche magnetische Flussänderung führt zu einer kurzzeitigen Spannungsinduktion in der Spule, und die so erzeugte elektrische Energie kann mit Gleichrichtern, vorzugsweise Halbleiter-Metallkontakt-Dioden gleichgerichtet und nach Zwischenspeicherung in einem Kondensator zum kurzzeitigen Betrieb eines Funkschalters oder Funksensors genutzt werden. Denkbar ist auch, mehrere Spulen zu verwenden, und auf eine Gleichrichtung der Energie, die insbesondere bei kleinen Spannungen hohe Verluste erzeugt, zu verzichten.

Die Polarität der erzeugten Spannung wechselt mit der Art der Betätigung. Diese Polarität ist von der angeschlossenen elektronischen Schaltung messbar und die darin enthaltene Information über die Richtung des Zustandswechsels mit dem auszusendenden Funksignal übertragbar.

Die Mechanik, welche auf den beweglichen Teil des Energiewandlers einwirkt, hat zumindest eine Betätigungseinrichtung, wie zum Beispiel eine Tasterfläche. Es können auch mehrere Betätigungseinrichtungen auf den einen Energiewandler in der gleichen Weise einwirken, wenn Funkschalter mit mehreren Kanälen realisiert werden sollen. In diesem Fall wird durch eine hinreichende Anzahl von Sensoren, zum Beispiel einen Sensor pro Betätigungseinrichtung, sichergestellt, daß die jeweils aktivierte Betätigungseinrichtung von der angeschlossenen Elektronik ermittelt wird. Die Information wird dann in das zu übertragende Funktelegramm eingebracht. Die angeschlossene Funkelektronik ist vorzugsweise in eine kompakte, miniaturisierte Einheit mit dem Energiewandler verbunden

Der magnetische Kreis ist konstruktiv beispielsweise so gestaltet, dass:
- eine Betätigung des beweglichen Teils zum Öffnen oder Schließen des Magnetkreises durch eine Feder oder ein anderes bewegliches magnetisch leitendes Bauteil führt.
- durch Verwendung einer Totpunktmechanik mit mindestens einem Federelement 9 zwei Zustände definiert sind, die bei Betätigung rasch wechseln
- durch dieses Federelement einer der beiden Zustände instabil gestaltet wird, so daß der bewegliche Teil des Magnetkreises nach dem Betätigen selbsttätig zurückschnappt, sobald die einwirkende Kraft einen konstruktiv vorgegebenen Wert unterschreitet
- wodurch ein Tastschalter realisiert werden kann, welcher beim Drücken wie auch beim Loslassen Energie wandelt.

Der mit dem Energiewandler betreibbare Funksender besitzt mindestens eine Betätigungseinrichtung, welches auf den Energiewandler mechanisch einwirkt. Besitzt er mehrere Betätigungseinrichtungen, wirken diese alle auf den einen Energiewandler und zusätzlich auf eine geeignete Anzahl Sensoren zur Detektion der jeweils aktivierten Betätigungseinrichtung. Die Informationen über die Identität des Betätigungsfeldes kann somit in das auszusendende Funksignal eingebracht werden.

Die Information über die Art der Betätigung (Drücken oder Loslassen bei Tastschaltern bzw. Drücken an verschiedenen Betätigungsflächen bei Kippschaltern) kann über die Polarität der erzeugten Spannung sensiert werden und ebenfalls mit dem Funksignal übertragen werden.

Die Funkelektronik zum Aussenden der Schaltinformation kann mit dem Energiewandler vorzugsweise zu einer baulich miniaturisierten, kompakten Einheit zusammengefasst werden.

### Bezugszeichenliste

- 1: elektrische Spule
- 2: Permanentmagnet
- 3: Teil des Magnetkreises, von el. Spule umfasst
- 4: Bodenplatte
- 5: elektrische Anschlüsse
- 6: bewegliches Element
- 7: Kraft
- 8: energieautarker Schalter, elektronische Schaltung
- 9: Federelement

## Patentansprüche

1. Energieautarke Funkeinheit, die baulich mit einem elektromagnetischen Energiewandler verbunden ist, um einen energieautarken Funkschalter oder energieautarken Funksensor mit elektrischem Strom zu versorgen,
wobei
der elektromagnetische Energiewandler umfasst:
einen Permanentmagneten, ein weichmagnetisches Element, ein bewegliches Element, und
eine elektrische Spule, die zumindest einen Teil des weichmagnetischen Elements umschließt,
wobei das bewegliche Element derart ausgebildet ist, dass jegliche Bewegung des beweglichen Elements aus einer ersten Ruhelage oder einer zweiten Ruhelage heraus zu einer Öffnung oder zu einer Schließung eines mit dem Permanentmagneten und dem weichmagnetischen Element gebildeten magnetischen Kreises führt,
wobei
der energieautarke Funkschalter oder energieautarke Funksensor mit dem Energiewandler baulich verbunden ist, um eine kompakte Einheit zu bilden und ein Funksignal zu erzeugen.

2. Energieautarke Funkeinheit nach Anspruch 1,
wobei
dem Funksignal als Zusatzinformation eine Polarität des elektrischen Stroms aufgeprägt ist, der davon abhängt, ob er durch ein Öffnen oder durch ein Schließen des magnetischen Kreises induziert wurde.

3. Energieautarke Funkeinheit nach Anspruch 1 oder 2,
wobei
mehrere Betätigungseinrichtungen dazu ausgelegt sind, auf den elektromagnetischen Energiewandler einzuwirken, um einen energieautarken Funkschalter oder energieautarken Funksensor mit mehreren Kanälen bereitzustellen.

4. Energieautarke Funkeinheit nach einem der vorhergehenden Ansprüche,
wobei
eine geeignete Anzahl von Sensoren verwendet wird, um sicherzustellen, dass die aktivierte Betätigungseinrichtung von einer Elektronik des energieautarken Funkschalters oder energieautarken Funksensors ermittelt wird.

5. Energieautarke Funkeinheit nach einem der vorhergehenden Ansprüche,
wobei
das bewegliche Element weichmagnetisches Material aufweist das insbesondere Eisen, Ferrit oder eine Nickel-EisenLegierung, oder ein sogenanntes Elektro- oder Trafoblech umfasst.

6. Energieautarke Funkeinheit nach einem der vorhergehenden Ansprüche,
wobei
das bewegliche Element durch magnetische Selbsthaltekräfte in der ersten oder zweiten Ruhelage gehalten wird.

7. Energieautarke Funkeinheit nach einem der vorhergehenden Ansprüche,
wobei das bewegliche Element umfasst:
ein Federelement, durch das die zweite Ruhelage instabil gestaltet wird, so dass nach einer Bewegung in die zweite Ruhelage das bewegliche Element in die erste Ruhelage zurückkehrt.

8. Energieautarke Funkeinheit nach einem der vorhergehenden Ansprüche,
wobei
das bewegliche Element eine Totpunktmechanik aufweist, die ein Öffnen oder Schließen des magnetischen Kreises bewirkt, sobald eine vorbestimmte, auf das bewegliche Element einwirkende Kraft überschritten ist.

9. Energieautarke Funkeinheit nach Anspruch 8,
wobei
das bewegliche Element aus dem Federelement besteht.

10. Energieautarke Funkeinheit einem der vorhergehenden Ansprüche,
wobei
der Permanentmagnet ringförmig ausgebildet ist, innerhalb des Rings das weichmagnetische Element angeordnet ist, das über eine Bodenplatte mit dem Permanentmagneten magnetisch verbunden ist.

11. Energieautarke Funkeinheit nach einem der vorhergehenden Ansprüche, wobei die Einheit als ein Schalter oder als ein Sensor ausgebildet ist.

12. Energieautarke Funkeinheit nach einem der vorhergehenden Ansprüche,
wobei
eine Trennung im magnetischen Kreis durch einen Luftspalt gebildet ist.

13. Energieautarke Funkeinheit nach einem der vorhergehenden Ansprüche,
wobei
ein energieautarker Funkschalter durch den elektromagnetischen Energiewandler mit elektrischer Energie versorgt wird.

14. Energieautarke Funkeinheit nach einem der vorhergehenden Ansprüche,
wobei
der elektrische Strom durch Gleichrichter, vorzugsweise Halbleiter-Metallkontakt-Dioden gleichgerichtet wird.

15. Energieautarke Funkeinheit nach einem der vorhergehenden Ansprüche,
wobei
die elektrische Ladung in einen Kondensator gespeichert wird.
